# EUROPEAN PATENT SPECIFICATION

(11) **EP 3 775 372 B1**
(45) Date of publication and mention of the grant of the patent: **11.10.2023**
(21) Application number: 19775215.7
(22) Date of filing: 22.03.2019
(51) Int. Cl.: D21H 21/14, D21H 21/50, D21H 19/14, D21H 19/40, D21H 19/66, D21H 19/68, D21H 27/00, D21H 27/02, D21H 27/10

(54) **PACKAGING MATERIAL WITH ABSORPTION FEATURES**
VERPACKUNGSMATERIAL MIT ABSORPTIONSEIGENSCHAFTEN
MATÉRIAU DE CONDITIONNEMENT PRÉSENTANT DES CARACTÉRISTIQUES D'ABSORPTION

(30) Priority: 27.03.2018 US 201862648633 P
(43) Date of publication of application: 17.02.2021
(73) Proprietor: Graphic Packaging International, LLC, Atlanta, GA 30328 (US)
(72) Inventor: BATES, Aaron, Kennesaw, GA 30152 (US)
(74) Representative: Grättinger Möhring von Poschinger Patentanwälte Partnerschaft mbB
(86) International application number: PCT/US2019/023584
(87) International publication number: WO 2019/190913

(56) References cited:
- EP-A1- 2 154 085
- WO-A1-03/006337
- WO-A1-2017/100557
- WO-A2-2004/099009
- US-A- 5 709 897
- US-A1- 2011 220 533
- US-A1- 2017 166 384

## Description

### CROSS-REFERENCE TO RELATED APPLICATIONS

### BACKGROUND OF THE DISCLOSURE

The present disclosure and invention relates to packaging material for blanks, containers, trays, cartons, and other suitable constructs. More specifically, the disclosure and invention is generally directed to a packaging material having features on a surface for allowing moisture to reach an absorbent internal layer.

### SUMMARY OF THE DISCLOSURE

In general, one aspect of the subject invention is generally directed to a packaging material for forming a construct for holding a food product as per claim 1.

In another aspect, the invention is generally directed to a method of forming a packaging material for forming a construct for holding a food product as per claim 11.

The dependent claims specify additional features of advantageous embodiments of the invention.

Those skilled in the art will appreciate the above stated advantages and other advantages and benefits of various additional embodiments reading the following detailed description of the embodiments with reference to the below-listed drawing figures.

### BRIEF DESCRIPTION OF THE DRAWINGS

According to common practice, the various features of the drawings discussed below are not necessarily drawn to scale. Dimensions of various features and elements in the drawings may be expanded or reduced to more clearly illustrate the embodiments of the disclosure.
Fig. 1 is a schematic plan view of a surface of a packaging material with absorption features according to a first exemplary embodiment of the disclosure.
Fig. 1A is a schematic view of absorption features of Fig. 1 having absorbed moisture according to the first exemplary embodiment of the disclosure.
Figs. 2A-2D are schematic partial cross-sectional views of the packaging material of Fig. 1 according to exemplary embodiments of the disclosure, wherein Figs 2A-2C show non-inventive reference examples comprising absorption features in only one surface of the packaging material, while Fig. 2D shows an inventive embodiment of the subject invention.
Fig. 3 is a schematic plan view of a surface of a packaging material with absorption features according to a second exemplary embodiment of the disclosure.

Corresponding parts are designated by corresponding reference numbers throughout the drawings.

### DETAILED DESCRIPTION OF THE EXEMPLARY EMBODIMENTS

The present disclosure relates generally to various aspects of a packaging material for containers, constructs, trays, materials, packages, elements, and articles, and methods of making such packaging material, containers, constructs, trays, materials, packages, elements, and articles. Although several different aspects, implementations, and embodiments are disclosed, numerous interrelationships between, combinations thereof, and modifications of the various aspects, implementations, and embodiments are contemplated hereby. In one illustrated embodiment, the present disclosure relates to a packaging material for forming a container or tray for holding food items or various other articles. However, in other embodiments, the container or tray can be used to hold other non-food containing articles or may be used for heating or cooking and/or the packaging material could be used to form other suitable constructs.

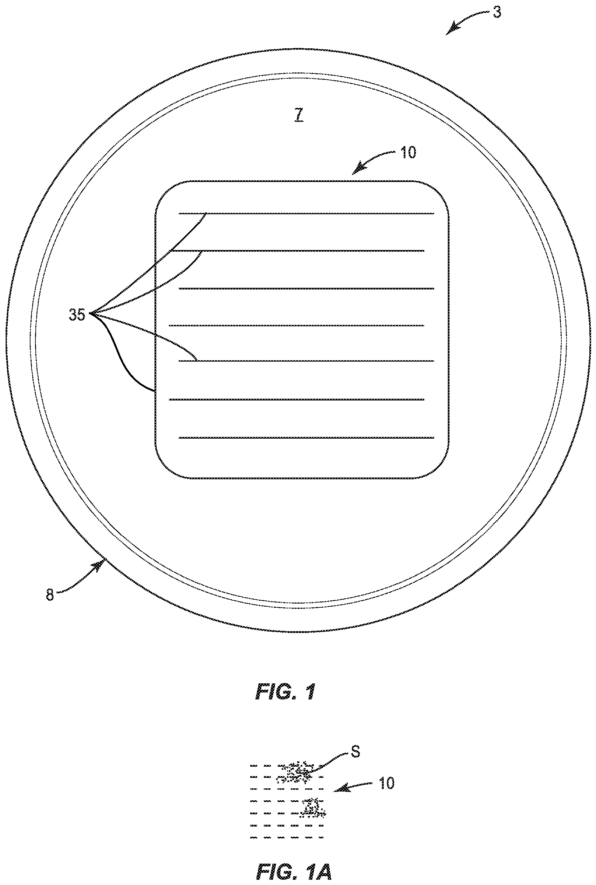

Fig. 1 illustrates a portion 3 (e.g., a blank) of a packaging material 8, wherein the portion 3 could be used to form a container or other construct (not shown) according to an exemplary embodiment of the disclosure. A surface 7 of the portion 3 is shown in Fig. 1. In the illustrated embodiment, the portion 3 includes absorption features 10 extending in the surface 7 of the packaging material 8. The portion 3 and/or the packaging materials could be alternatively shaped without departing from the scope of the invention as defined in the claims.

As shown in Fig. 1, the absorption features 10 can include a plurality of partial cuts or slits 35 arranged in a series of lines surrounded by a rectangle with rounded corners. The absorption features could be arranged in any suitable pattern or configuration without departing from the disclosure. In addition, in alternative embodiments, the absorption features 10 could include perforations and/or partial perforations that extend at least partially through the packaging material 8. The perforations can be in the form of full and/or partial cuts, slits, pin points, apertures, openings, etc. As per the invention, the absorption features 10 are for at least partially absorbing moisture and/or moisture vapor into the interior of the packaging material 8, wherein the moisture is schematically shown generally at S in Fig. 1A.

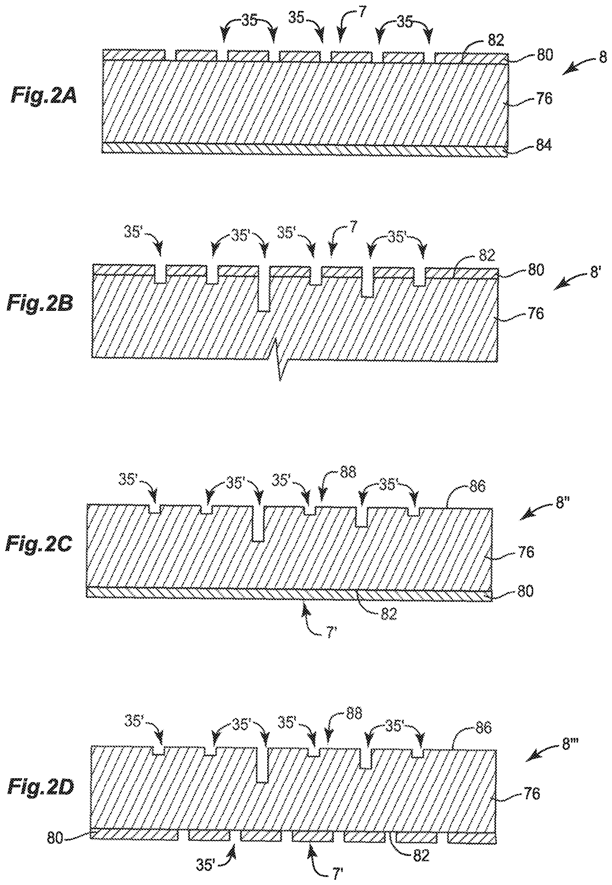

Fig. 2A shows a schematic cross-sectional view of the packaging material 8 according to a reference example. The packaging material 8 includes a base layer 76 (e.g., paperboard) and a coating 80 on a face 82 of the base layer 76. In one embodiment, the coating 80 can be a clay coating, which can be commonly associated with paperboard packaging materials. Alternatively, the coating 80 could be any suitable barrier layer, film, coating, and/or laminated material without departing from the scope of the invention as defined in the claims. The coating 80 at least partially forms a barrier to moisture and/or moisture vapor so that moisture and/or moisture vapor is generally prevented from engaging the base layer 76. Accordingly, moisture can collect on the surface 7 of the packaging material 8 and/or moisture vapor can condense and collect on the surface 7, and such moisture can contribute to undesirable features (e.g., sogginess) of a food product or other article held by a container formed from the packaging material. However, the absorption features 10 (i.e., partial cuts 35) are included in the surface 7 for allowing moisture and/or moisture vapor to engage the base layer 76 and be at least partially absorbed by the paperboard of the base layer 76. In one embodiment, an optional coating, film, laminated material, etc. 84 can be included on the face of the base layer 76 opposite to the face 82.

As shown in Fig. 2A, the partial cuts 35 can extend in the coating 80 to the face 82 of the base layer 7. In another embodiment shown in Fig. 2B, the alternative packaging material 8' can have partial cuts 35' that can extend through the face 82 into the base layer 76. As shown in the reference example of Fig. 2B, the partial cuts 35' can extend to various depths in the base layer 76. Alternatively, the partial cuts 35' could extend to any suitable depth and/or can be formed at similar or identical depths. As shown in a further reference example according to Fig. 2C, the packaging material 8" can include partial cuts 35' formed in an uncoated face 86 of the base layer 76 at a surface 88 of the packaging material 8". In one embodiment, the coating 80 on the face 82 can be generally free of cuts and can form a surface 7' of the packaging material 8". As shown in the inventive embodiment pursuant to Fig. 2D, the packaging material 8'" can be similar to the packaging material 8" of Fig. 2C with partial cuts 35 and/or partial cuts 35' (not shown) in the coating 80 and/or the face 82 of the base layer 76. The packaging material could be otherwise shaped, arranged, configured, and/or positioned without departing from the invention as defined in the claims. For example, the packaging material could include any suitable layers of paperboard and/or any suitable coatings.

In the illustrated embodiment, the partial cuts 35, 35' provide passageways from the surface 7 and the surface 88 to the paperboard layer 76 for the transmission of moisture and/or moisture vapor to the paperboard layer. The partial cuts 35, 35' can be formed by conventional cutting tools, and/or the perforations could be formed by applying the coating 80 as a patterned layer during a coating process (not shown). The patterned layer could include selective areas that are free from the coating 80 to allow moisture to be absorbed by the paperboard layer 76. The partial cuts 35, 35' could be otherwise shaped, arranged, configured, and/or positioned without departing from the scope of the invention as defined in the claims. For example, perforations of the absorption features 10 could be alternatively shaped (e.g., curved cuts, circular or polygonal apertures or punctures, and/or other suitable shapes) or could be otherwise positioned without departing from the disclosure.

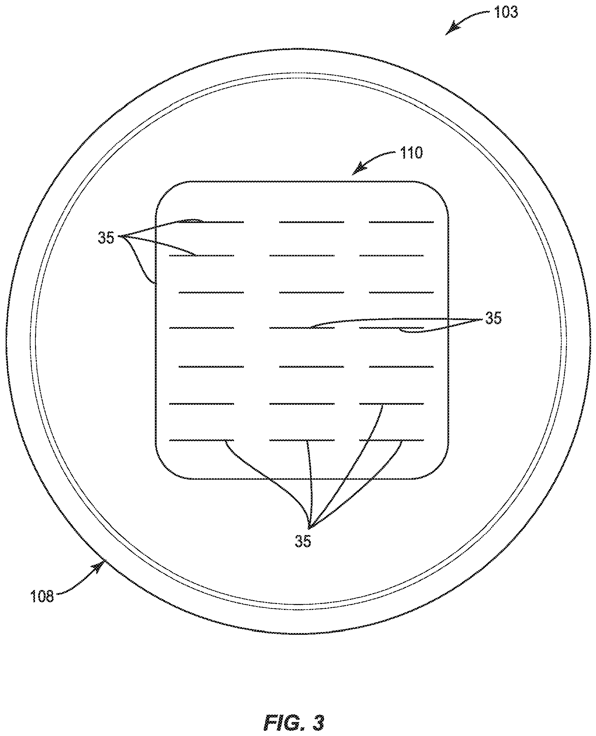

Fig. 3 is a plan view of a portion 103 of a packaging material 108 for forming a container (not shown) according to a second embodiment of the disclosure. The second embodiment is generally similar to the first embodiment, except for variations noted and variations that will be apparent to one of ordinary skill in the art. Accordingly, similar or identical features of the embodiments have been given like or similar reference numbers. As shown in Fig. 3, the portion 103 can include an alternative absorption feature 110 with perforations (i.e., partial cuts 35) arranged in a spaced array. For example, as shown in Fig. 3, the perforations can be in the form of slits arranged in a plurality of spaced rows and spaced columns. Any of the perforations, lines, arrays, and/or other aspects of the absorption feature 110 could be omitted or could be otherwise shaped, arranged, configured, and/or positioned without departing from the scope of the invention as defined in the claims.

In one embodiment, the absorption features 10, 110 can allow the paperboard of the base layer 76 to absorb moisture in order to keep the food or other items held in a container formed from the packaging materials 8, 8', 8", 8‴, 108 fresh and crunchy versus soft and mushy, which can be caused by moisture collecting on a surface of the packaging material and engaging the food product (e.g., being absorbed by the food product) if the absorption features are omitted. The disclosure also includes a method of altering one or more surfaces of a packaging material (e.g., to form perforations) in order to allow moisture vapor to reach the interior of the paperboard (e.g., the fibers of the paperboard). Accordingly, by strategically utilizing cuts, partial cuts, pin points, and/or other features, one can control the amount of linear inches of the paperboard exposed, which would allow moisture vapors to enter and be absorbed by the fibers of the paperboard. In one exemplary embodiment, the configuration of the absorption features 10 in Fig. 1 had a 13 percent increase in moisture absorption relative to a control sample with no absorption features in a test. In another exemplary example, the configuration of the absorption features 110 in Fig. 3 had a 3 percent increase in moisture absorption relative to a control sample with no absorption features in another test. Accordingly, one can control the amount of moisture that can be absorbed by the base layer 76 via the absorption features 10, 110 by controlling the linear inches of the absorption features 10, 110 in the packaging material. For example, the total linear inches of the partial cuts 35 in Fig. 1 is greater than the total linear inches of the partial cuts 35 in Fig. 3, and the absorption features 10 allowed the packaging material 8 of Fig. 1 to absorb more moisture than did the absorption features 110 in the packaging material 108 of Fig. 3 in the exemplary embodiments noted above.

Any of the features of the various embodiments of the disclosure can be combined with, replaced by, or otherwise configured with other features of other embodiments of the disclosure without departing from the scope of the invention as defined in the claims.

Optionally, one or more portions of the blank or other constructs described herein or contemplated hereby may be coated with varnish, clay, or other materials, either alone or in combination. The coating may then be printed over with product advertising or other information or images. The blanks or other constructs also may be selectively coated and/or printed so that less than the entire surface area of the blank or substantially the entire surface area of the blank may be coated and/or printed.

All dimensional information presented herein is intended to be illustrative of certain aspects, features, etc., of various embodiments of the disclosure, and is not intended to limit the scope of the disclosure. The dimensions of the blanks, containers, forming tools, features, or any other dimension, can be more or less than what is shown and described in this disclosure without departing from the scope of the invention as defined in the claims and can be within the listed ranges of dimensions for each feature or outside the listed ranges of dimensions for each feature without departing from the scope of the invention as defined in the claims.

In accordance with the exemplary embodiments, the blanks may be constructed of paperboard of a caliper such that it is heavier and more rigid than ordinary paper. The blanks can also be constructed of other materials, such as cardboard, hard paper, or any other material having properties suitable for enabling the carton package to function at least generally as described above.

## Claims

1. A packaging material (8, 8', 8", 8‴, 108) for forming a construct for holding a food product, the packaging material (8, 8', 8", 8‴, 108) comprising:
at least a base layer (76) and a coating (80) on a first face (82) of the base layer (76), wherein the base layer (76) comprises a second face (86) opposite to the first face (82), and wherein the base layer (76) comprises paperboard and the coating (80) comprises a barrier layer of the packaging material (8, 8', 8", 8‴, 108); and
absorption features (10, 110) comprising a plurality of partial cuts (35, 35') comprising partial cuts (35, 35') extending in the coating (80) at least to the first face (82) of the base layer (76) and partial cuts (35, 35') extending in the second face (86) of the base layer (76), the plurality of partial cuts (35, 35') being for allowing fluids to be absorbed by an interior of the paperboard of the base layer (76).

2. The packaging material (8, 8', 8", 8‴, 108) of claim 1, wherein the plurality of partial cuts (35, 35') provide a plurality of passageways extending partially through the base layer (76) and the coating (80), respectively.

3. The packing material of claim 2, wherein the passageways extend through the coating (80) and into the base layer (76).

4. The packaging material (8, 8', 8", 8‴, 108) of claim 2, wherein the passageways comprise slits extending partially through the base layer (76) and the coating (80), respectively.

5. The packaging material (8, 8', 8", 8‴, 108) of claim 2, wherein the passageways are arranged in an array on at least a portion of the packaging material (8, 8', 8", 8‴, 108).

6. The packaging material (8, 8', 8", 8‴, 108) of claim 1, wherein the coating (80) is a clay coating on the paperboard of the base layer (76).

7. The packaging material (8, 8', 8", 8‴, 108) of claim 6, wherein the plurality of partial cuts (35, 35') provide a plurality of passageways extending through the clay coating.

8. The packaging material (8, 8', 8", 8‴, 108) of claim 6, wherein the plurality of partial cuts (35, 35') provide a plurality of passageways extending in at least the paperboard.

9. The packaging material (8, 8', 8", 8‴, 108) of claim 1, wherein the packaging material (8, 8', 8", 8‴, 108) comprises a film (84) on the second face of the base layer (76),
the coating (80) is a clay coating on the paperboard of the base layer (76), and the plurality of partial cuts (35, 35') provide a plurality of passageways extending through the clay coating and into the base layer (76).

10. The packaging material (8, 8', 8", 8‴, 108) of claim 1, wherein the second face (86) extends along an outer surface (88) of the packaging material (8, 8', 8", 8‴, 108).

11. A method of forming a packaging material (8, 8', 8", 8‴, 108) for forming a construct for holding a food product, the method comprising:
obtaining a material comprising at least a base layer (76) and a coating (80) on a first face (82) of the base layer (76), wherein the base layer (76) comprises a second face (86) opposite to the first face (82), and wherein the base layer (76) comprises paperboard and the coating (80) comprises a barrier layer of the packaging material (8, 8', 8", 8‴, 108); and
forming absorption features (10, 110) comprising forming a plurality of partial cuts (35, 35'), which comprises forming partial cuts (35, 35') in the coating (80) at least to the first face (82) of the base layer (76) and forming partial cuts (35, 35') extending in the second face (86) of the base layer (76) for allowing fluids to be absorbed by an interior of the base layer (76).

12. The method of claim 11, wherein the forming the absorption features (10, 110) comprises controlling an amount of linear inches of the absorption features (10, 110) in the coating (80) and the base layer (76) to control a potential amount of fluids absorbed by the base layer (76) via the absorption features (10, 110).

13. The method of claim 11, wherein the plurality of partial cuts (35, 35') provide a plurality of passageways extending partially through the base layer (76) and the coating (80), respectively, and the forming the plurality of partial cuts (35, 35') comprises cutting through the coating (80) to the face (82) of the base layer (76).

14. The method of claim 11, wherein the plurality of partial cuts (35, 35') provide a plurality of passageways extending partially through the base layer (76) and the coating (80), respectively, the forming the plurality of partial cuts (35, 35') comprises cutting through the coating (80) and into the base layer (76).

15. The method of claim 14, wherein the forming the plurality of partial cuts (35, 35') comprises arranging the partial cuts (35, 35') in an array on at least a portion of the packaging material (8, 8', 8", 8‴, 108).

16. The method of claim 11, wherein the coating (80) is a clay coating on the paperboard of the base layer (76), the forming the plurality of partial cuts (35, 35') comprises providing a plurality of passageways that extend through the clay coating.

17. The method of claim 11, wherein and the coating (80) is a clay coating on the paperboard of the base layer (76), the forming the plurality of partial cuts (35, 35') comprises providing a plurality of passageways that extend in at least the paperboard.

18. The method of claim 12, wherein the packaging material (8, 8', 8", 8‴, 108) comprises a film (84) on the second face of the base layer (76).

19. The method of claim 12, wherein the second face (86) extends along an outer surface (88) of the packaging material (8, 8', 8", 8‴, 108).

## Patentansprüche

1. Verpackungsmaterial (8, 8', 8", 8‴, 108) zur Bildung eines Konstrukts zum Aufnehmen eines Lebensmittelprodukts, wobei das Verpackungsmaterial (8, 8', 8'', 8''', 108) umfasst:
wenigstens eine Basisschicht (76) und eine Beschichtung (80) auf einer ersten Seite (82) der Basisschicht (76), wobei die Basisschicht (76) eine zweite Seite (86) gegenüber der ersten Seite (82) umfasst und wobei die Basisschicht (76) Karton umfasst und die Beschichtung (80) eine Barriereschicht des Verpackungsmaterials (8, 8', 8'', 8''', 108) umfasst; und
Absorptionsmerkmale (10, 110), die eine Vielzahl von Teilschnitten (35, 35') umfassen, die ihrerseits Teilschnitte (35, 35'), die sich in der Beschichtung (80) wenigstens bis zur ersten Seite (82) der Basisschicht (76) erstrecken, und Teilschnitte (35, 35'), die sich in der zweiten Fläche (86) der Basisschicht (76) erstrecken, umfassen, wobei die Vielzahl der Teilschnitte (35, 35') dazu dient, dass Flüssigkeiten von einem Inneren des Kartons der Basisschicht (76) absorbiert werden können.

2. Verpackungsmaterial (8, 8', 8'', 8''', 108) nach Anspruch 1, wobei die Vielzahl der Teilschnitte (35, 35') mehrere Durchlässe bereitstellt, die sich teilweise durch die Basisschicht (76) beziehungsweise die Beschichtung (80) erstrecken.

3. Verpackungsmaterial nach Anspruch 2, wobei sich die Durchlässe durch die Beschichtung (80) und in die Basisschicht (76) erstrecken.

4. Verpackungsmaterial (8, 8', 8", 8‴, 108) nach Anspruch 2, wobei die Durchlässe Schlitze umfassen, die sich teilweise durch die Basisschicht (76) beziehungsweise die Beschichtung (80) erstrecken.

5. Verpackungsmaterial (8, 8', 8'', 8''', 108) nach Anspruch 2, wobei die Durchlässe in einem Feld auf wenigstens einem Teil des Verpackungsmaterials (8, 8', 8'', 8''', 108) angeordnet sind.

6. Verpackungsmaterial (8, 8', 8'', 8''', 108) nach Anspruch 1, wobei die Beschichtung (80) eine Tonbeschichtung auf dem Karton der Basisschicht (76) ist.

7. Verpackungsmaterial (8, 8', 8'', 8''', 108) nach Anspruch 6, wobei die mehreren Teilschnitte (35, 35') mehrere Durchlässe bereitstellen, die sich durch die Tonbeschichtung erstrecken.

8. Verpackungsmaterial (8, 8', 8'', 8''', 108) nach Anspruch 6, wobei die mehreren Teilschnitte (35, 35') mehrere Durchlässe bereitstellen, die sich wenigstens in der Pappe erstrecken.

9. Verpackungsmaterial (8, 8', 8'', 8''', 108) nach Anspruch 1, wobei das Verpackungsmaterial (8, 8', 8'', 8''', 108) einen Film (84) auf der zweiten Seite der Basisschicht (76) umfasst, wobei
die Beschichtung (80) eine Tonbeschichtung auf dem Karton der Basisschicht (76) ist und die Vielzahl der Teilschnitte (35, 35') eine Vielzahl von Durchlässen bereitstellt, die sich durch die Tonbeschichtung und in die Basisschicht (76) hinein erstrecken.

10. Verpackungsmaterial (8, 8', 8'', 8''', 108) nach Anspruch 1, wobei sich die zweite Fläche (86) entlang einer Außenfläche (88) des Verpackungsmaterials (8, 8', 8'', 8''', 108) erstreckt.

11. Verfahren zur Bildung eines Verpackungsmaterials (8, 8', 8'', 8''', 108) zur Ausbildung eines Konstrukts zum Aufnehmen eines Lebensmittelprodukts, wobei das Verfahren umfasst:
Erhalten eines Materials, das wenigstens eine Basisschicht (76) und eine Beschichtung (80) auf einer ersten Seite (82) der Basisschicht (76) umfasst, wobei die Basisschicht (76) eine zweite Seite (86) gegenüber der ersten Seite (82) umfasst und wobei die Basisschicht (76) Karton umfasst und die Beschichtung (80) eine Barriereschicht aus dem Verpackungsmaterial (8, 8', 8", 8"', 108) umfasst; und
Bilden von Absorptionsmerkmalen (10, 110), umfassend das Bilden einer Vielzahl von Teilschnitten (35, 35'), was das Bilden von Teilschnitten (35, 35') in der Beschichtung (80) wenigstens bis zur ersten Fläche (82) der Basisschicht (76) und das Bilden von Teilschnitten (35, 35'), die sich in der zweiten Fläche (86) der Basisschicht (76) erstrecken, umfasst, um zu ermöglichen, dass Flüssigkeiten von einem Inneren der Basisschicht (76) absorbiert werden.

12. Verfahren nach Anspruch 11, wobei das Ausbilden der Absorptionsmerkmale (10, 110) das Steuern einer linearen Zollgröße der Absorptionsmerkmale (10, 110) in der Beschichtung (80) und der Basisschicht (76) umfasst, um eine potenzielle Menge an Flüssigkeiten zu steuern, die von der Basisschicht (76) über die Absorptionsmerkmale (10, 110) absorbiert werden können.

13. Verfahren nach Anspruch 11, wobei die Vielzahl der Teilschnitte (35, 35') eine Vielzahl von Durchlässen bereitstellt, die teilweise durch die Basisschicht (76) beziehungsweise die Beschichtung (80) verlaufen und wobei das Bilden der Vielzahl von Teilschnitten (35, 35') das Schneiden durch die Beschichtung (80) bis zur Fläche (82) der Basisschicht (76) umfasst.

14. Verfahren nach Anspruch 11, wobei die Vielzahl von Teilschnitten (35, 35') eine Vielzahl von Durchlässen bereitstellt, die sich teilweise durch die Basisschicht (76) beziehungsweise die Beschichtung (80) erstrecken, und wobei das Bilden der Vielzahl von Teilschnitten (35, 35') das Schneiden durch die Beschichtung (80) und in die Basisschicht (76) hinein umfasst.

15. Verfahren nach Anspruch 14, wobei das Bilden der Vielzahl von Teilschnitten (35, 35') das Anordnen der Teilschnitte (35, 35') in einem Feld auf wenigstens einem Abschnitt des Verpackungsmaterials (8, 8', 8'', 8''', 108) umfasst.

16. Verfahren nach Anspruch 11, wobei die Beschichtung (80) eine Tonbeschichtung auf dem Karton der Basisschicht (76) ist, wobei das Bilden der Vielzahl von Teilschnitten (35, 35') das Bereitstellen einer Vielzahl von Durchlässen umfasst, die sich durch die Tonbeschichtung erstrecken.

17. Verfahren nach Anspruch 11, wobei die Beschichtung (80) eine Tonbeschichtung auf dem Karton der Basisschicht (76) ist, wobei das Bilden der Vielzahl von Teilschnitten (35, 35') das Bereitstellen einer Vielzahl von Durchlässen umfasst, die sich wenigstens bis zum Karton erstrecken.

18. Verfahren nach Anspruch 12, wobei das Verpackungsmaterial (8, 8', 8'', 8''', 108) einen Film (84) auf der zweiten Seite der Basisschicht (76) umfasst.

19. Verfahren nach Anspruch 12, wobei sich die zweite Fläche (86) entlang einer Außenfläche (88) des Verpackungsmaterials (8, 8', 8", 8‴, 108) erstreckt.

## Revendications

1. Matériau d'emballage (8, 8', 8", 8‴, 108) permettant de former une structure destinée à contenir un produit alimentaire, le matériau d'emballage (8, 8', 8", 8‴, 108) comprenant :
au moins une couche de base (76) et un revêtement (80) sur une première face (82) de la couche de base (76), dans lequel la couche de base (76) comprend une deuxième face (86) opposée à la première face (82), et dans lequel la couche de base (76) comprend du papier cartonné et le revêtement (80) comprend une couche barrière du matériau d'emballage (8, 8', 8", 8‴, 108) ; et
des éléments absorbants (10, 110) comprenant une pluralité d'entailles partielles (35, 35') comprenant des entailles partielles (35, 35') s'étendant dans le revêtement (80) au moins jusqu'à la première face (82) de la couche de base (76) et des entailles partielles (35, 35') s'étendant dans la deuxième face (86) de la couche de base (76), la pluralité d'entailles partielles (35, 35') étant destinées à permettre l'absorption de fluides par un intérieur du papier cartonné de la couche de base (76).

2. Matériau d'emballage (8, 8', 8", 8‴, 108) selon la revendication 1, dans lequel la pluralité d'entailles partielles (35, 35') fournissent une pluralité de passages s'étendant partiellement à travers la couche de base (76) et le revêtement (80), respectivement.

3. Matériau d'emballage selon la revendication 2, dans lequel les passages s'étendent à travers le revêtement (80) et dans la couche de base (76).

4. Matériau d'emballage (8, 8', 8", 8‴, 108) selon la revendication 2, dans lequel les passages comprennent des fentes s'étendant partiellement à travers la couche de base (76) et le revêtement (80), respectivement.

5. Matériau d'emballage (8, 8', 8", 8‴, 108) selon la revendication 2, dans lequel les passages sont agencés en réseau sur au moins une partie du matériau d'emballage (8, 8', 8", 8‴, 108).

6. Matériau d'emballage (8, 8', 8", 8‴, 108) selon la revendication 1, dans lequel le revêtement (80) est un enrobage d'argile sur le papier cartonné de la couche de base (76).

7. Matériau d'emballage (8, 8', 8", 8‴, 108) selon la revendication 6, dans lequel la pluralité d'entailles partielles (35, 35') fournissent une pluralité de passages s'étendant à travers l'enrobage d'argile.

8. Matériau d'emballage (8, 8', 8", 8‴, 108) selon la revendication 6, dans lequel la pluralité d'entailles partielles (35, 35') fournissent une pluralité de passages s'étendant au moins dans le papier cartonné.

9. Matériau d'emballage (8, 8', 8", 8‴, 108) selon la revendication 1, dans lequel le matériau d'emballage (8, 8', 8", 8‴, 108) comprend un film (84) sur la deuxième face de la couche de base (76),
le revêtement (80) est un enrobage d'argile sur le papier cartonné de la couche de base (76), et la pluralité d'entailles partielles (35, 35') fournissent une pluralité de passages s'étendant à travers l'enrobage d'argile et dans la couche de base (76).

10. Matériau d'emballage (8, 8', 8", 8‴, 108) selon la revendication 1, dans lequel la deuxième face (86) s'étend le long d'une surface extérieure (88) du matériau d'emballage (8, 8', 8", 8‴, 108).

11. Procédé de formation d'un matériau d'emballage (8, 8', 8", 8‴, 108) permettant de former une structure destinée à contenir un produit alimentaire, le procédé comprenant :
l'obtention d'un matériau comprenant au moins une couche de base (76) et un revêtement (80) sur une première face (82) de la couche de base (76), dans lequel la couche de base (76) comprend une deuxième face (86) opposée à la première face (82), et dans lequel la couche de base (76) comprend du papier cartonné et le revêtement (80) comprend une couche barrière du matériau d'emballage (8, 8', 8", 8‴, 108) ; et
la formation d'éléments absorbants (10, 110) comprenant la formation d'entailles partielles (35, 35'), comprenant la formation d'entailles partielles (35, 35') dans le revêtement (80) au moins jusqu'à la première face (82) de la couche de base (76) et la formation d'entailles partielles (35, 35') s'étendant dans la deuxième face (86) de la couche de base (76) pour permettre l'absorption de fluides par un intérieur de la couche de base (76).

12. Procédé selon la revendication 11, dans lequel la formation des éléments absorbants (10, 110) comprend le contrôle d'une quantité de pouces linéaires des éléments absorbants (10, 110) dans le revêtement (80) et la couche de base (76) pour contrôler une quantité potentielle de fluides absorbés par la couche de base (76) par le biais des éléments absorbants (10, 110).

13. Procédé selon la revendication 11, dans lequel la pluralité d'entailles partielles (35, 35') fournissent une pluralité de passages s'étendant partiellement à travers la couche de base (76) et le revêtement (80), respectivement, et la formation de la pluralité d'entailles partielles (35, 35') comprend la coupe à travers le revêtement (80) jusqu'à la face (82) de la couche de base (76).

14. Procédé selon la revendication 11, dans lequel la pluralité d'entailles partielles (35, 35') fournissent une pluralité de passages s'étendant partiellement à travers la couche de base (76) et le revêtement (80), respectivement, la formation de la pluralité d'entailles partielles (35, 35') comprenant la coupe à travers le revêtement (80) et dans la couche de base (76) .

15. Procédé selon la revendication 14, dans lequel la formation de la pluralité d'entailles partielles (35, 35') comprend l'agencement des entailles partielles (35, 35') en réseau sur au moins une partie du matériau d'emballage (8, 8', 8", 8‴, 108).

16. Procédé selon la revendication 11, dans lequel le revêtement (80) est un enrobage d'argile sur le papier cartonné de la couche de base (76), la formation de la pluralité d'entailles partielles (35, 35') comprend la mise à disposition d'une pluralité de passages s'étendant à travers l'enrobage d'argile.

17. Procédé selon la revendication 11, dans lequel le revêtement (80) est un enrobage d'argile sur le papier cartonné de la couche de base (76), la formation de la pluralité d'entailles partielles (35, 35') comprend la mise à disposition d'une pluralité de passages s'étendant au moins dans le papier cartonné.

18. Procédé selon la revendication 12, dans lequel le matériau d'emballage (8, 8', 8", 8‴, 108) comprend un film (84) sur la deuxième face de la couche de base (76) .

19. Procédé selon la revendication 12, dans lequel la deuxième face (86) s'étend le long d'une surface extérieure (88) du matériau d'emballage (8, 8', 8", 8‴, 108) .
